# EUROPÄISCHE PATENTSCHRIFT

(11) **EP 0 460 003 B1**
(45) Veröffentlichungstag und Bekanntmachung des Hinweises auf die Patenterteilung: **12.05.1993**
(21) Anmeldenummer: 90903018.1
(22) Anmeldetag: 20.02.1990
(51) Int. Cl.: B64C 13/28, F16D 59/02

(54) **ANTRIEBSEINRICHTUNG MIT VARIABLEM DREHMOMENT-BEGRENZUNGSSYSTEM**
DRIVE DEVICE WITH VARIABLE TORQUE-LIMITING SYSTEM
SYSTEME D'ENTRAINEMENT A LIMITATION VARIABLE DU MOMENT DE ROTATION

(30) Priorität: 23.02.1989 DE 3905576
(43) Veröffentlichungstag der Anmeldung: 11.12.1991
(73) Patentinhaber: ZF FRIEDRICHSHAFEN Aktiengesellschaft, 88038 Friedrichshafen (DE)
(72) Erfinder: FISCHER, Manfred, D-7778 Markdorf (DE); MAGG, Alfred, D-7990 Friedrichshafen (DE)
(86) Internationale Anmeldenummer: EP9000273
(87) Internationale Veröffentlichungsnummer: WO9009921

(56) Entgegenhaltungen:
- FR-A- 2 424 445
- US-A- 4 030 578

## Beschreibung

Die Erfindung betrifft eine Antriebseinrichtung mit einem Drehmomentbegrenzer, bestehend aus einer Eingangswelle und einer Ausgangswelle, einem Antriebsflansch mit Antriebsrampen, einem in bezug auf die Eingangswelle konzentrisch und axial beweglich angeordneten Abtriebsflansch mit Abtriebsrampen, wobei die An- und Abtriebsrampen unter der Wirkung eines die Vorspannkraft erzeugenden Federpakets an Wälzkörpern abgestützt sind sowie einer Lamellenbremse.

Bei einer bekannten Antriebseinrichtung (DE-T1-35 90 370, Veröffentlichung der internationalen Anmeldung mit der Veröffentlichungs-Nr.: WO 86/00968) besteht der Stelltrieb aus einem Mehrstufengetriebe mit einer Serie von Planeten-Differentialen. Bei dem vorbekannten Stelltrieb sind Maßnahmen zur Begrenzung eines maximalen Abtriebsdrehmoments nicht angesprochen.

In der DE-OS 36 20 886 ist eine Antriebseinrichtung für einen Stelltrieb zur Verlagerung eines Trägerwagens eines Tragflügelbestandteils dargestellt und beschrieben. Bei dieser Antriebseinrichtung wird die Last für die Bewegung des Trägerwagens, vom einer zentralen Antriebseinheit und einem ersten Differentialgetriebe ausgehend, über zwei Lastwege übertragen. Hierzu treibt das erste Differentialgetriebe zwei Abtriebswellen an, die über ein weiteres Differentialgetriebe zwei Kurbeltriebe des Trägerwagens betätigen. Die Anzahl der Umdrehungen der Antriebswelle und einer Abtriebswelle werden ständig miteinander verglichen. Hierzu wird eine sogenannte Delta-Alpha-Bremse eingesetzt, die die An- bzw. Abtriebswelle bei einer auftretenden Winkeldifferenz festbremst. Dadurch wird der Trägerwagen und mithin die Landeklappe in ihrer Position festgehalten. Somit hat diese Anordnung den Vorteil, daß bei Überschreitung einer maximal zulässigen Abtriebkraft wie sie beispielsweise bei Vereisung vorkommt, der Antrieb des Trägerwagens unterbrochen wird. Der Bruch eines Elements innerhalb eines Lastweges ist ebenfalls unschädlich, da der andere Lastweg in der Lage ist, die mechanischen und aerodynamischen Lasten zu halten.

Die bekannten Antriebseinrichtungen bzw. Stelltriebe sind mit einer Reihe von Nachteilen behaftet. Bei der Veröffentlichung DE-T1-35 90 370 ist eine Drehmomentenbegrenzung nicht angesprochen, während beim Gegenstand nach der DE-OS 36 20 886 diesem Umstand Rechnung getragen wurde. Beiden Anordnungen ist jedoch ein schlechter Wirkungsgrad gemeinsam. Unter Berücksichtigung, daß der durch Multiplikation der - ohnehin nicht guten - Einzelwirkungsgrade von Planeten-Differentialen bzw. Differentialgetrieben sich ergebende Gesamtwirkungsgrad völlig unbefriedigend ist, sind derartige Antriebseinrichtungen bzw. Stelltriebe für den praktischen Einsatz nur bedingt tauglich.

Aus der US-A-40 30 578 ist ferner ein Getriebe mit einer Einrichtung zur Begrenzung eines maximal zulässigen Abtriebsdrehmoments zur Verwendung in Antriebseinrichtungen für Stelltriebe zum Ein- und Ausfahren von Tragflügelbestandteilen eines Luftfahrzeugs bekannt geworden. Ein derartiger Drehmomentbegrenzer setzt sich im wesentlichen aus einer Eingangswelle, einer Abtriebswelle, einer Lamellenbremse und einem Endtrieb zusammen. Die Eingangs- und Abtriebswelle werden über Spreizelemente, wie z. B. Kugeln, unter dem Einfluß einer durch ein Federpaket erzeugten Vorspannkraft in Anlage gehalten. Die zur Übertragung eines Drehmoments notwendige Umfangskraft wird an den Spreizelementen aufgeteilt, so daß sich eine Spreizkraft einstellt, die der Vorspannkraft des Federpakets entgegenwirkt und die sich proportional zum übertragbaren Drehmoment verhält.
Übersteigt die Spreizkraft die Vorspannkraft, so beginnen sich die An- und Abtriebsrampen zu spreizen. Nach Aufheben eines Spiels, das vorhanden ist, um die Lamellen der Lamellenbremse bei geöffneter Lamellenbremse ohne eine gegenseitige Beeinflussung umlaufen zu lassen, werden die Lamellen zusammengepreßt. Durch das Schließen der Lamellenbremse wird ein Bremsmoment erzeugt, so daß das Abtriebsdrehmoment auf einen bestimmten Wert begrenzt werden kann. Eine Antriebseinrichtung für einen Stelltrieb mit einem derartigen Drehmomentbegrenzer hat - neben einer wirksamen Begrenzung des Abtriebsdrehmoments - den Vorteil eines guten Wirkungsgrads. Hinzu kommt, daß der Antrieb bei Blockage z. B. im Falle einer aufgetretenen Vereisung, jederzeit reversiert und erneut betätigt werden kann. Neben den genannten Vorteilen hat es sich bei Verwendung eines Stelltriebs, der insbesondere als kurbelgetriebe ausgebildet ist, als nachteilig herausgestellt, daß die kräftemäßige Beanspruchung einzelner Bauteile besonders hoch ist. Diese hohe Beanspruchung tritt insbesondere in den Endlagen des Stelltriebs auf.

Ausgehend von einer Antriebseinrichtung der vorstehend genannten Art für einen Stelltrieb unter Verwendung eines Drehmomentbegrenzers liegt der Erfindung, die Aufgabe zugrunde, den Drehmomentbegrenzer so auszubilden, daß er neben seiner Hauptfunktion, ein maximal zulässiges Abtriebsdrehmoment zu begrenzen, zusätzlich in der Lage ist, kräftemäßig hochbeanspruchte Bauteile des Stelltriebs vor Überbeanspruchung zu schützen.

Die gestellte Aufgabe wird erfindungsgemäß dadurch gelöst, daß zur Erfassung der Anzahl der Umdrehungen der Ausgangswelle ein Vergleichselement vorgesehen ist, daß das Federpaket am Abtriebsflansch und am Vergleichselement abgestützt ist und daß die Vorspannkraft des Federpakets durch Erzeugen einer Relativdrehung zwischen dem Vergleichselement und dem Abtriebsflansch bzw. einem Koppelglied veränderbar ist.

Ausgehend von der Erkenntnis, daß trotz Verwendung eines Drehmomentbegrenzers innerhalb des Stelltriebs einzelne Bauteile kräftemäßig hoch beansprucht werden, kann mit der vorgeschlagenen Lösung das übertragbare Abtriebsdrehmoment des Drehmomentbegrenzers selbsttätig variiert werden, so daß den jeweils herrschenden kräftemäßigen Beanspruchungen gezielt Rechnung getragen wird. Insbesondere lassen sich hohe Beanspruchungen einzelner Bauteile des Stelltriebs in seinen Endlagen vermeiden. Hierzu ist es besonders vorteilhaft, das übertragbare Abtriebsdrehmoment (T_{ab}) am Beginn und am Ende einer Anzahl von Umdrehungen der Ein- und Ausgangswelle auf etwa gleiche oder niedrigere Werte - verglichen mit den Werten des dazwischenliegenden Bereichs der Anzahl von Umdrehungen der Ein- und Ausgangswelle - zu begrenzen.

Eine besonders einfache Lösung zur selbsttätigen Veränderung des übertragbaren Abtriebsdrehmoments besteht darin, daß die Vorspannkraft des Federpakets in Abhängigkeit der Anzahl der Umdrehungen der Ein- und Ausgangswelle selbsttätig verändert wird.

Das Vergleichselement ist vorzugsweise in bezug auf die Eingangswelle, den Antriebsflansch bzw. das Kuppelglied und den Antriebsflansch axial unverschiebbar, jedoch drehbar sowie drehantreibbar - vorzugsweise vom Ausgangskegelrad ausgehend - angeordnet ist (Merkmale der Patentansprüche 4 und 5).

Zur Veränderung der Vorspannkraft des Federpakets kann ein Vergleichselement mit einer ringförmigen Schulter Verwendung finden, die eine Steuerbahn aufweist. Durch Abstützung des Federpakets am Vergleichselement, was ohne nennenswerte Reibungsverluste über Kugeln erfolgen kann, ist die Veränderung der Vorspannkraft in konstruktiv besonders einfacher Bauweise möglich (Merkmale der Patentansprüche 6 und 7).

Um das Federpaket an den Kugeln abzustützen, ist ein Stützring zweckmäßig, der über Wälzkörper an einer Endscheibe des Federpakets anliegen kann, um die Reibung zu minimieren, wie dies in den Patentansprüchen 8 und 9 vorgeschlagen wird.

Nach einem weiteren vorteilhaften Merkmal der Erfindung steht ein Eingangskegelrad mit einem ersten Zahnkranz in treibender Verbindung, so daß ein erster Trieb gebildet wird. Ein Zahnrad des Vergleichselements kämmt mit einem zweiten Zahnkranz, womit ein zweiter Trieb gebildet wird (Merkmale des Patentanspruchs 13). Eine Lösung, die die vorgeschlagenen Merkmale aufweist, zeichnet sich durch einen einfachen Aufbau aus. Mit wenigen Bauteilen und besonders einfach aufgebauten Antriebsverbindungen ist es möglich, die Voraussetzungen für eine besonders einfache Möglichkeit zur Veränderung der Vorspannkraft des Federpakets zu schaffen.

Die Übersetzungen der Triebe sind so auszulegen, daß sich die Übersetzung des ersten Triebs geringfügig von der Übersetzung des zweiten Triebs unterscheidet. So ist es beispielsweise möglich, bei einer vorgegebenen Anzahl von Umdrehungen des Ausgangskegelrads die Anzahl der Umdrehungen des Eingangskegelrads geringfügig größer oder kleiner als die Anzahl der Umdrehungen des Zahnrads des Vergleichselements zu wählen, um die Relativdrehung des Vergleichselements herbeizuführen. (Maßnahmen, wie sie im Patentanspruch 12 vorgeschlagen werden.)

Bei einem bevorzugten Ausführungsbeispiel der Erfindung liegt nach Erreichen einer vorgegebenen Anzahl von Umdrehungen der Ausgangswelle eine Relativdrehung zwischen dem Vergleichselement und dem Abtriebsflansch um etwa 120° vor. Analog zu dieser Relativdrehung liegen an der Steuerbahn drei Kugeln an, und die Steuerbahn weist um jeweils 120° versetzt angeordnete Erhöhungen bzw. Vertiefungen auf und verläuft im übrigen wellenförmig (vergleiche Patentansprüche 13, 14 und 15).

Eine besonders einfache Ausgestaltung und Lagerung des Vergleichselements ist Gegenstand der Patentansprüche 16 bis 18.

Bei einem weiteren Ausführungsbeispiel des Gegenstands nach der Erfindung, bei dem von einer Anordnung ausgegangen wird, bei der die Lamellen der Lamellenbremse zwischen dem Abtriebsflansch und dem die Vorspannkraft erzeugenden Federpaket angeordnet sind, liegt die den Lamellen gegenüberliegende Seite des Federpakets an einem Gegenlager an, das mit einem Ende eines Stellglieds fest verbunden ist, wobei das andere Ende des Stellglieds an den Kugeln anliegt. Bei dieser Ausführungsform weist das Gegenlager und auch das gegenüberliegende Ende des Stellglieds sternförmig angeordnete, radial gerichtete Finger auf, die Ausnehmungen der Eingangswelle durchgreifen, so daß das Stellglieds axial beweglich in bezug auf die Eingangswelle angeordnet ist.

Nähere Einzelheiten sowie weitere Merkmale der Erfindung und die daraus resultierenden Vorteile sind der nachfolgenden Beschreibung zweier Ausführungsbeispiele zu entnehmen.

Es zeigen:
- Fig. 1: eine Draufsicht auf einen Tragflügel eines Luftfahrzeugs in schematischer Darstellung;
- Fig. 2: eine Antriebseinrichtung zur Verlagerung von Tragflügelbestandteilen des Tragflügels nach Fig. 1;
- Fig. 3: Teile der Antriebseinrichtung mit einem Stelltrieb zur Verlagerung eines Tragflügelbestandteils in vereinfachter Darstellung, gesehen in Seitenansicht;
- Fig. 4: die kräftemäßige Beanspruchung eines Bauteils des Stelltriebs nach Fig. 3;
- Fig. 5: eine erste Ausführungsform eines Drehmomentbegrenzers, gesehen im Längsschnitt;
- Fig. 6: einen Teilschnitt entlang der Linie VI-VI in Fig. 5;
- Fig. 7: einen Teilschnitt entlang der Linie VII-VII in Fig. 5;
- Fig. 8: eine weitere Ausführungsform eines Drehmomentbegrenzers;
- Fig. 9: die schematische Darstellung der Kräfte-Weg-Verhältnisse in Form eines Diagramms und
- Fig. 10: die schematische Darstellung der wirksamen Drehmomente über dem Schwenkweg des Stelltriebs, ebenfalls in Form eines Diagramms.

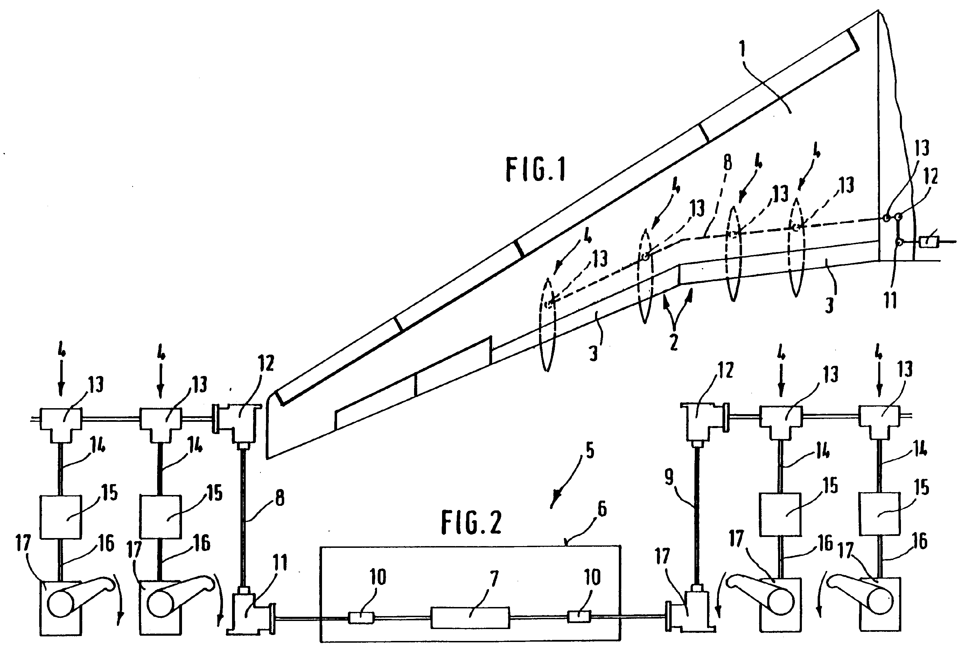

In Fig. 1 sind in schematischer Darstellung die Umrisse eines Tragflügels 1 eines selbst nicht dargestellten Luftfahrzeugs zu erkennen. Es handelt sich hierbei um den linken Tragflügel.

Der Tragflügel 1 verfügt über mehrere Tragflügelbestandteile 2, die zur Veränderung des aerodynamischen Profils des Tragflügels 1 ein- und ausgefahren werden können. Bei den Tragflügelbestandteilen 2 kann es sich beispielsweise um Vorflügel, Landeklappen, Spoiler oder Abweiser handeln. Im dargestellten Ausführungsbeispiel werden Fowler-Klappen 3 betätigt. Die Verlagerung der Fowler-Klappen 3 erfolgt in Antriebsstationen 4 mit Hilfe einer Antriebseinrichtung 5, deren grundsätzlicher Aufbau der zeichnerischen Darstellung entsprechend Fig. 2 zu entnehmen ist.

Mittelpunkt der Antriebseinrichtung ist eine zentrale Kraft-Einheit 6 mit einem Verteilergetriebe 7, von dem aus jeweils ein zentraler Antriebswellenstrang 8 bzw. 9 für den linken bzw. rechten Tragflügel 1 des Luftfahrzeugs angetrieben wird. Der Antrieb erfolgt über Drehmomentbegrenzer 10, die das maximal zulässige Abtriebsdrehmoment für den zentralen Antriebswellenstrang 8 bzw. 9 begrenzen. Die Antriebsleistung wird über Winkelgetriebe 11 und 12 zu den Antriebsstationen 4 des rechten bzw. linken Tragflügels 1 des Luftfahrzeuges geleitet. Jeder Tragflügel 1 verfügt über fünf Antriebsstationen 4, von denen jeweils zwei aus der Zeichnung ersichtlich sind.

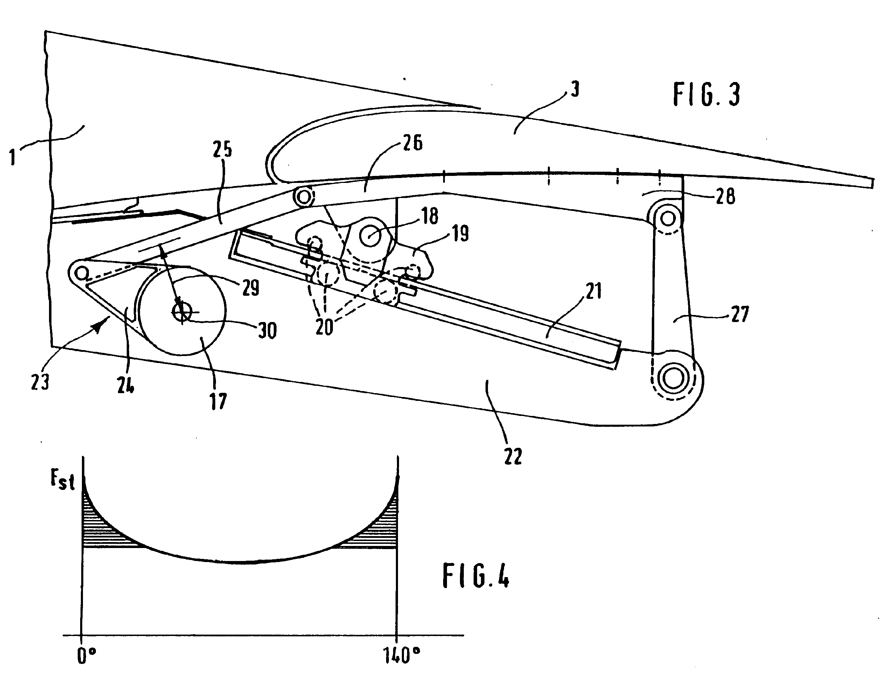

Im folgenden wird der Aufbau einer Antriebsstation 4 anhand der Fig. 2 und 3 näher erläutert: Ein T-Trieb 13 wird vom zentralen Antriebswellenstrang 8 bzw. 9 durchsetzt. Eine Abtriebswelle 14 steht mit einem Drehmomentbegrenzer 15 in Antriebsverbindung. Eine Ausgangswelle 16 des Drehmomentbegrenzers 15 steht mit einem Stelltrieb 17 in Antriebsverbindung.

In Fig. 3 ist zunächst der hintere Bereich des Tragflügels 1 mit der sich hieran anschließenden Fowler-Klappe 3 zu erkennen. Die Fowler-Klappe 3 ist über eine Gelenkverbindung 18 mit einem Trägerwagen 19 der Antriebsstation 4 verbunden. Der Trägerwagen 19 ist über Führungselemente 20 in einer geradlinig verlaufenden Führungsbahn 21 geführt und entlang dieser verfahrbar. Die Führungsbahn 21 ist Bestandteil eines Gestells 22 eines Kurbelgetriebes 23, das aus dem Stelltrieb 17, der als gestellfester Schwenktrieb ausgebildet ist, einer Kurbel 24 des Stelltriebs 17, einer Koppelstange 25, die das freie Ende der Kurbel 24 mit der vorderen Unterseite 26 der Fowler-Klappe 3 verbindet und einer Schwinge 27, die die Verbindung zwischen der hinteren Unterseite 28 der Fowler-Klappe 3 und dem Gestell 22 übernimmt, zusammengesetzt.

Die Verlagerung der Fowler-Klappe 3 geschieht wie folgt:

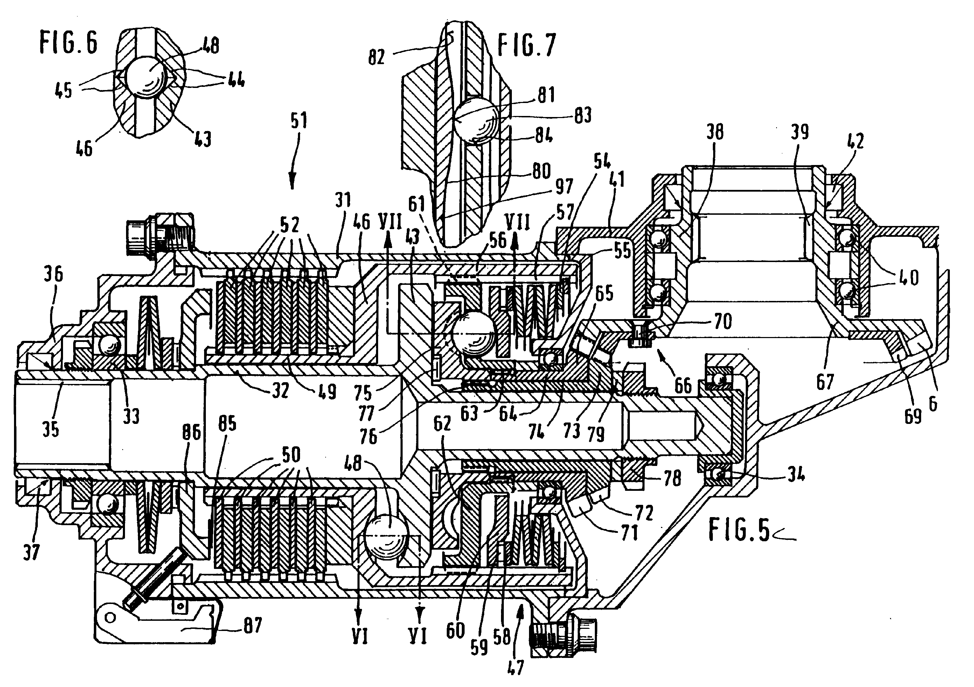

Bei Betätigung der zentralen Kraft-Einheit 6 wird die Antriebsleistung zu gleichen Teilen über die zentralen Antriebswellenstränge 8 und 9 auf die Antriebsstationen 4 übertragen. Innerhalb jeder Antriebsstation 4 wird die Antriebsleistung über die Abtriebselle 14, den Drehmomentbegrenzer 15 und Ausgangswelle 16 zum Stelltrieb 17 geleitet. Aus der in Fig. 3 dargestellten Ausgangslage, die der Stellung im Reiseflug entspricht, wird die Fowler-Klappe 3 durch das Kurbelgetriebe 23 mit Hilfe des Trägerwagens 19 entlang der Führungsbahn 21 bewegt; d. h. ausgefahren. Die Kurbel 24 des Stelltriebs 17 wird um ca. 140° verdreht, bis die Fowler-Klappe 3 vollständig ausgefahren ist, d. h., ihre Endstellung erreicht hat. Die Abtriebswelle 14, die mit einer Eingangswelle 32 (Fig. 5) des Drehmomentbegrenzers 15 antriebsmäßig verbunden ist, überträgt ein Antriebsdrehmoment Tₐₙ, während die Ausgangswelle 16 ein Abtriebsdrehmoment T_{ab} in den Stelltrieb 17 einleitet.

Im Falle einer Blockage, wie sie z. B. bei Vereisung vorkommen kann, hat der Drehmomentbegrenzer 15 die Aufgabe, das übertragbare Abtriebsdrehmoment T_{ab} zu begrenzen. Zusätzlich spricht in diesem Fall der Drehmomentbegrenzer 10 an, so daß das Drehmoment des zentralen Antriebswellenstrangs 8 bzw. 9 begrenzt wird.

Durch die Kinematik des Kurbelgetriebes 23 bedingt, treten in den Endlagen des Schwenktriebs 17, also in den Lagen, in denen der Abstand 29 der Kurbelstange 25 vom Zentrum 30 des Stelltriebs 17 am kleinsten ist, relativ hohe Kurbelstangenkräfte Fₛₜ auf.

Um die Verhältnisse zu verdeutlichen, zeigt die schematische Darstellung in Form eines Diagramms nach Fig. 4 den prinzipiellen Verlauf der Kurbelstangenkräfte Fₛₜ über dem Schwenkweg 0° bis 140° des Stelltriebs 17 bzw. der Kurbel 24 des Stelltriebs 17. Zu sehen ist, daß die Kurbelstangenkräfte Fₛₜ im Bereich der 0°-Position und im Bereich der 140°-Position hohe Werte erreichen. Die Bereiche, die sich durch überdurchschnittlich hohe Kurbelstangenkräfte Fₛₜ auszeichnen, sind in der Darstellung durch Schraffur besonders hervorgehoben.

Die Fig. 5 zeigt ein erstes Ausführungsbeispiel eines Drehmomentbegrenzers 15 im Längsschnitt. Mit allgemeinen Worten formuliert hat der Drehmomentbegrenzer 15 neben der Aufgabe, ein maximal zulässiges Abtriebsdrehmoment T_{ab} zu begrenzen, zusätzlich die Funktion zu erfüllen, das überträgbare Abtriebsdrehmoment T_{ab} in Abhängigkeit von der jeweiligen Position des Stelltriebs 17 bzw. seiner Kurbel 24 in vorgegebenen Grenzen variabel zu halten, so daß die Werte, bei denen eine Begrenzung des Abtriebsdrehmoments T_{ab} vorgenommen wird - je nach Position des Stelltriebs 17 bzw. seiner Kurbel 24 - voneinander abweichen. Ziel dieser Anordnung ist es, unzulässig hohe Kräfte Fₛₜ in der Koppelstange 25 des Kurbelgetriebes 23 zu vermeiden.

Der Aufbau des in Fig. 5 dargestellten Drehmomentbegrenzers 15 gestaltet sich wie folgt:

Innerhalb eines Getriebegehäuses 31, das aus insgesamt vier Teilen zusammengefügt ist, ist eine Eingangswelle 32 über Kugellager 33 und 34 drehbar gelagert. Im Bereich des Kugellagers 33 weist die Eingangswelle 32 eine innere Mitnahmeverzahnung 35 auf, die mit einer selbst nicht dargestellten Mitnahmeverzahnung der Abtriebswelle 14 in formschlüssiger Verbindung steht.

Das Kugellager 33 ist in einem Deckel 36 zentriert. Ein Dichtring 37 übernimmt die Abdichtung zwischen dem Deckel 36 und der Eingangswelle 32.

Über die Eingangswelle 32 wird ein Antriebsdrehmoment Tₐₙ in den Drehmomentbegrenzer 15 eingeleitet. Über eine Ausgangswelle 38, die als Hohlwelle ausgebildet ist, wird ein Abtriebsdrehmoment T_{ab} abgegeben.

Die Ausgangswelle 38 weist eine innere Mitnahmeverzahnung 39 auf, die mit einer Mitnahmeverzahnung der Ausgangswelle 16 zum Antrieb des Stelltriebs 17 in formschlüssiger Antriebsverbindung steht (in Fig. 5 nicht dargestellt). Die Ausgangswelle 38 ist über ein Kugellagerpaar 40 innerhalb eines weiteren Deckels 41 des Getriebegehäuses 31 drehbar gelagert. Zwischen dem Deckel 41 und der Ausgangswelle 38 ist ein weiterer Dichtring 42 wirksam.

Die Eingangswelle 32 weist - bezogen auf ihre Längenerstreckung - einen etwa mittig liegenden Antriebsflansch 43 auf. In diesem Antriebsflansch 43 sind insgesamt drei Antriebsrampen 44 vorgesehen. Den Antriebsrampen liegen drei Abtriebsrampen 45 gegenüber, die in eimen Abtriebsflansch 46 eingearbeitet sind.

Die sich gegenüberliegenden An- und Abtriebsrampen 44 und 45 liegen unter der Wirkung einer von einem Federpaket 47 erzeugten Vorspannkraft an insgesamt drei Wälzkörpern, wie z. B. Kugeln 48, an.

Der Abtriebsflansch 46 ist als Träger 49 für Innenlamellen 50 einer Lamellenbremse 51 ausgebildet. Außenlamellen 52, die sich am Getriebegehäuse 31 innen abstützen, vervollständigen die Lamellenbremse 51.

Das Federpaket 47 stützt sich mit seinem in der Zeichnung rechts liegenden Ende gegen eine Endscheibe 54 ab. Die Endscheibe 54 ist mit Hilfe eines Sicherungsrings 55 in einer hülsenförmigen Verlängerung des Abtriebsflansches 46 lagegesichert. Die hülsenförmige Verlängerung bildet mit dem Abtriebsflansch 46 ein topfartig geformtes Bauteil, das den Antriebsflansch 43 übergreift. Sie verfügt ferner über eine innere Mitnahmeverzahnung 57.

Das in der Zeichnung links liegende Ende des Federpakets 47 liegt ebenfalls an einer Endscheibe 58 an. Die Endscheibe 58 liegt über Wälzkörper 59 an einem Stützring 60 an. Die Wälzkörper 59 gewährleisten eine im wesentlichen reibungsfreie Relativdrehung des Stützrings 60 gegenüber der Endscheibe 58.

In die innere Mitnahmeverzahnung 57 der hülsenförmigen Verlängerung 56 des Abtriebsflanschs 46 greift eine äußere Mitnahmeverzahnung 61 eines Kuppelglieds 62 formschlüssig ein. Das Kuppelglied 62 steht über eine weitere Mitnahmeverzahnung 63 mit einer Hohlwelle 64 in Antriebsverbindung. Die Hohlwelle 64 geht an ihrem in der Zeichnung rechts liegenden Ende in ein Eingangskegelrad 65 eines als Winkelgetriebe gestalteten Endtriebs 66 des Drehmomentbegrenzers 15 über. Ein Ausgangskegelrad 67 des Endtriebs 66 steht mit der Ausgangswelle 38 des Drehmomentbegrenzers 15 in drehfester Verbindung. Im beschriebenen Ausführungsbeispiel sind diese Elemente in einem einzigen Bauteil zusammengefaßt.

Das Ausgangskegelrad weist Zahnkränze 68 und 69 auf. Die Zahnkränze 68 und 69 sind beispielsweise über Schraub- oder Nietverbindungen 70 miteinander drehfest verbunden. Im beschriebenen Ausführungsbeispiel weist der Zahnkranz 68 74 Zähne auf; der Zahnkranz 69 hat 79 Zähne.

Durch den kämmenden Eingriff Ces Eingangskegelrads 65 mit dem ersten Zahnkranz 68 des Ausgangskegelrads 67 wird ein erster Trieb 71 gebildet. Die Übersetzung des ersten Triebs 71 errechnet sich zu 29:74 = i₁ = 0,39189.

Ein zweiter Trieb 72 wird durch die kämmende Antriebsverbindung des zweiten Zahnkranzes 69 mit einem Zahnrad 73 eines Vergleichselements 74 gebildet. Das Zahnrad 73 hat eine Zähnezahl von 31, so daß sich die Übersetzung des zweiten Triebs 72 auf 31:79 = i₂ = 0,39240 beläuft.

Beim Vergleich der Übersetzung i₁ und i₂ kann festgestellt werden, daß sich die Übersetzung des ersten Triebs 71 geringfügig von der Übersetzung des zweiten Triebs 72 unterscheidet. Im dargestellten Ausführungsbeispiel sind die Übersetzungen i₁ und i₂ so aufeinander abgestimmt, daß bei einer vorgegebenen Anzahl von Umdrehungen des Ausgangskegelrads 38 die Anzahl der Umdrehungen des Eingangskegelrads 65 gerinfgügig größer als die Anzahl der Umdrehungen des Zahnrads 73 des Vergleichselements 74 ist. Im konkreten Fall beträgt die Differenz 0,29 Umdrehungen. Im übrigen gilt:

Die Anzahl der Umdrehungen der Ausgangswelle 38 des Drehmomentbegrenzers 15 beträgt 86 Umdrehungen, um die Kurbel 24 des Stelltriebs 17 aus ihrer Ausgangsposition (Fig. 3, 0°-Position entsprechend Fig. 4) in ihre Endposition (140°-Position entsprechend Fig. 4) zu überführen.

Mit Hilfe der voneinander geringfügig abweichenden Übersetzungen i₁ und i₂ des ersten Triebs 71 und des zweiten Triebs 72 wird eine Relativdrehung des Vergleichselements 74 (0,29 Umdrehungen) erzeugt, die auf eine ringförmige Schulter 75 übertragen wird. Dies geschieht über eine Mitnahmeverzahnung 76. Im übrigen ist das Vergleichselement 74 als Hohlwelle ausgebildet.

Die Schulter 75 ist über ein Axiallager 77 auf der Seite des Antriebsflansches 43 abgestützt, die dem Abtriebsflansch 46 abgewandt ist, wie dies aus der Zeichnung ohne weiteres ersichtlich ist.

Bemerkt sei noch, daß das als Hohlwelle ausgebildete Vergleichselement 74 über eine Sicherungsmutter 78 und einen Einstellring 79 mit geringem axialen Spiel auf der Eingangswelle 32 des Drehmomentbegrenzers 15 frei drehbar gelagert ist. In gleicher Weise ist die Hohlwelle 64 mit dem Eingangskegelrad 65 auf dem Vergleichselement 74 mit geringem axialen Spiel, jedoch ansonsten frei drehbar gelagert.

Die Schulter 75 ist mit einer Steuerbahn 80 versehen, die wellenförmig verläuft und demzufolge Erhöhungen 81 und Vertiefungen 82 aufweist. Es sind jeweils drei Erhöhungen 81 und Vertiefungen 82 vorhanden, die demzufolge um jeweils 120° zueinander versetzt liegend angeordnet sind. An der Steuerbahn 80 liegen Kugeln 83 an. Die Anzahl der Kugeln 83 ist auf die Gestaltung der Steuerbahn 80 abgestimmt; es finden drei Kugeln 83 Verwendung. Die Kugeln 83 sind zweckmäßigerweise mit geringem Spiel in Bohrungen 84 des Koppelgliedes 62 geführt. Es ist nun ersichtlich, daß die Abstützung des Federpakets 47 am Vergleichselement - und zwar an seiner Schulter 75 über die an der Steuerbahn 80 anliegenden Kugeln 83 - erfolgt.

Aus den bisher gemachten Ausführungen wird deutlich, daß die Vorspannkraft des Federpakets 47, die dafür sorgt, daß der Abtriebsflansch 46 in Richtung auf den Antriebsflansch 43 belastet wird, variabel ist. Die mögliche Veränderung der Vorspannkraft geschieht mit Hilfe des Vergleichselements 74, seiner Schulter 75, der Steuerbahn 80 und den Kugeln 83. Bei einer bestimmten Anzahl von Umdrehungen des Eingangskegelrads 65 des Endtriebs 66 macht das Ausgangskegelrad 67 - und damit die Ausgangswelle 38 - eine bestimmte Anzahl von Umdrehungen. Dieser bestimmten Anzahl von Umdrehungen der Ausgangswelle 38 entspricht eine Relativdrehung des Vergleichselements 74, die durch den zweiten Trieb 72 erzeugt wird. Im vorliegenden Fall macht die Schulter 75 des Vergleichselements 74 eine Relativdrehung von 120°, bezogen auf die bestimmte Anzahl von Umdrehungen der Ausgangswelle 38, was die bereits erwähnten 86 Umdrehungen sind.

Wenn nun die Antriebsstationen 4 in Betrieb gesetzt werden, liegen die Kugeln 83 in den Vertiefungen 82 der Steuerbahn 80. Die Vorspannkraft des Federpakets 47 ist dann auf ihrem kleinsten Wert. Mit zunehmender Anzahl der Umdrehungen der Ausgangswelle 38 und damit mit zunehmendem Schwenkweg der Kurbel 24 des Stelltriebs 17 erhöht sich der Wert der Vorspannkraft des Federpakets 47 zunehmend. Dies ist darauf zurückzuführen, daß die Kugeln 83 durch die Relativdrehung des Vergleichselements 74 in Richtung auf die Erhöhungen 81 der Steuerbahn 80 geführt werden. Die Kugeln 83 werden hierbei - bezogen auf die Darstellung nach Fig. 5 - nach rechts verschoben, so daß die Vorspannkraft - durch die Verlagerung des Stützrings 60 nach rechts - erhöht wird. Der Anstieg der Vorspannkraft kann im übrigen durch die geometrische Form der Steuerbahn 80 unterschiedlich beeinflußt werden. Im vorliegenden Fall verläuft die Steuerbahn 80 etwa sinus-wellenförmig. Andere geometrische Formen sind jedoch, je nach Bedarf, möglich.

Die Vorspannkraft des Federpakets 47 erreicht bei der beschriebenen Lösung ein Maximum etwa dann, wenn die Hälfte der vorgegebenen Anzahl der Umdrehungen der Ausgangswelle 38 erreicht ist. Dies würde dann dem halben Schwenkwinkel entsprechen, der der Kurbel 24 des Stelltriebs 17 auf dem Wege von der einen zu der anderen Endlage (0°-Position bzw. 140°-Position und umgekehrt) zur Verfügung steht.

Wenn die Ausgangswelle 38 weitere Umdrehungen zurücklegt, nimmt die Vorspannkraft des Federpakets 47 wieder ab, um erneut den niedrigsten Wert zu erreichen, bei dem die Kugeln 83 wiederum in den Vertiefungen 82 der Steuerbahn 80 liegen.

Die Wirkungsweise des Drehmomentbegrenzers 15 ist ansonsten wie folgt:

Der Antrieb des Drehmomentbegrenzers 15 erfolgt über die Eingangswelle 32 und den Antriebsflansch 43. Der Abtriebsflansch 46 wird federbelastet gegen den Antriebsflansch 43 gedrückt. Die Abstützung erfolgt über Kugeln 48 an An- und Abtriebsrampen 44 und 45.

Die zur Drehmomentübertragung notwendige Umfangskraft wird an den Kugeln 48 aufgeteilt, so daß eine Spreizkraft erzeugt wird, die der Vorspannkraft des Federpakets 47 entgegenwirkt. Übersteigt die Spreizkraft die Vorspannkraft, so beginnt sich der Abtriebsflansch 46 vom Antriebsflansch 43 zu entfernen. Nach Verbrauch eines vorgegebenen Spiels 85 werden die Innen- und Außenlamellen 50 und 52 der Lamellenbremse 51 durch Anlage an einem federbelasteten Anschlag 86 zusammengepreßt. Bei steigendem Antriebsdrehmoment Tₐₙ wird das übertragbare Abtriebsdrehmoment T_{ab} an der Ausgangswelle 38 des Drehmomentbegrenzers 15 begrenzt. Die überschüssige Antriebsleistung wird von der Lamellenbremse 51 umgesetzt.

Durch eine Anzeigevorrichtung 87 wird ein Ansprechen der Lamellenbremse 51 sichtbar gemacht.

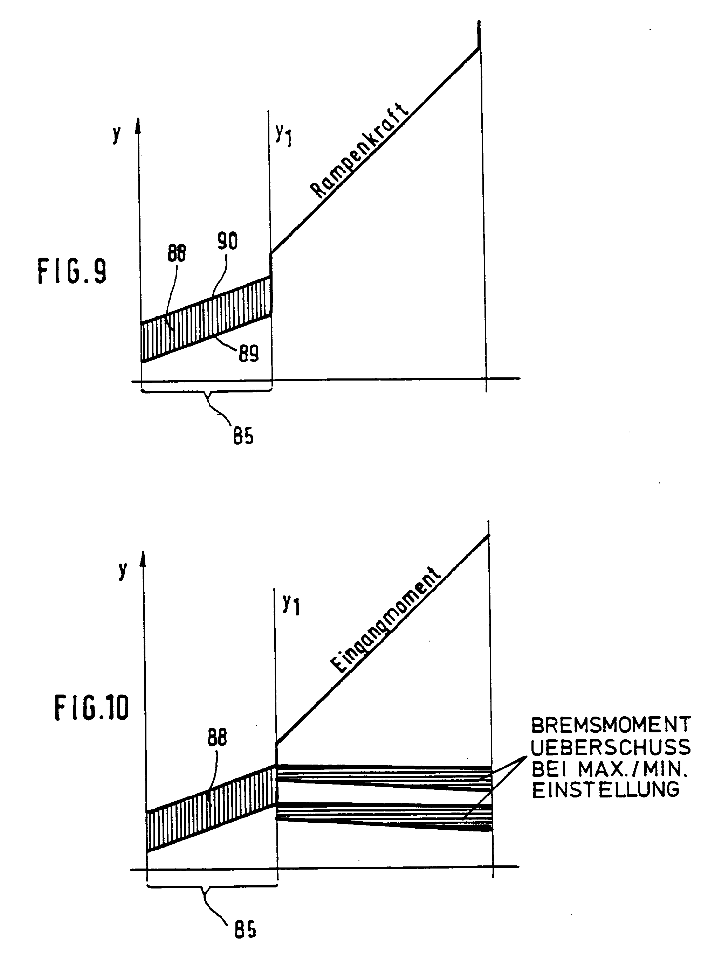

Für die Funktion des Drehmomentbegrenzers 15 ist, was bereits aus der vorhergehenden Beschreibung ersichtlich ist, wesentlich, daß durch die Veränderung der Vorspannkraft des Federpakets 47 in Abhängigkeit der Anzahl der Umdrehungen, die die Ausgangswelle 38 macht, das übertragbare Abtriebsdrehmoment T_{ab} in den Grenzen eines Verstellbereichs 88, der in Fig. 9 durch die schraffiert gezeichnete Fläche hervorgegeben ist, variabel ist.

Im übrigen zeigt die Fig. 9 den prinzipiellen Verlauf der Federkräfte über den Federwegen. Die untere Linie 89 gibt den Verlauf bei niedriger Vorspannkraft des Federpakets 47 wieder. Hier gilt, daß die Kugeln 83 in den Vertiefungen 82 der Steuerbahn 80 liegen. Die obere Linie 90 gibt den Verlauf der hohen Vorspannkraft des Federpakets 47 wieder. Hier gilt, daß die Kugeln 83 auf den Erhöhungen 81 der Steuerbahn 80 liegen. Die y-Achse entspricht der Ausgangsstellung, d. h., der Position des Abtriebsflanschs 46 bei maximalem (Nenn-)Spiel 85. Die y₁-Achse markiert den Bremsbeginn. Die y-, y₁-Achse, die Linie 89 und die Linie 90 markieren die Grenzen des Verstellbereichs 88.

Der Drehmomentbegrenzer 15 kann auf jeder beliebigen Arbeitskennlinie (die parallel zu den Linien 89 bzw. 90 verläuft) in den genannten Grenzen des Verstellbereichs 88 betrieben werden. Das übertragbare Abtriebsdrehmoment T_{ab} an der Ausgangswelle 38 ist somit zwischen einem unteren Wert (Bremsbeginn auf der Linie 89) und einem oberen Wert (Bremsbeginn auf der Linie 90) begrenzbar. Die Werte, bei denen die Lamellenbremse 51 im Schließsinne betätigt wird, sind abhängig von der Anzahl der Umdrehungen, die die Ausgangswelle 38 - von einer Anfangs- bzw. Endposition ausgehend - zurückgelegt hat. Auf diese Weise ist es möglich, Bauteile der Antriebseinrichtung, insbesondere Bauteile des Kurbelgetriebes 23, vor unzulässig hohen kräftemäßigen Beanspruchungen wirksam zu schützen.

Die Fig. 10 gibt den Verlauf der Drehmomente wieder und entspricht in analoger Weise der Darstellung nach Fig. 9.

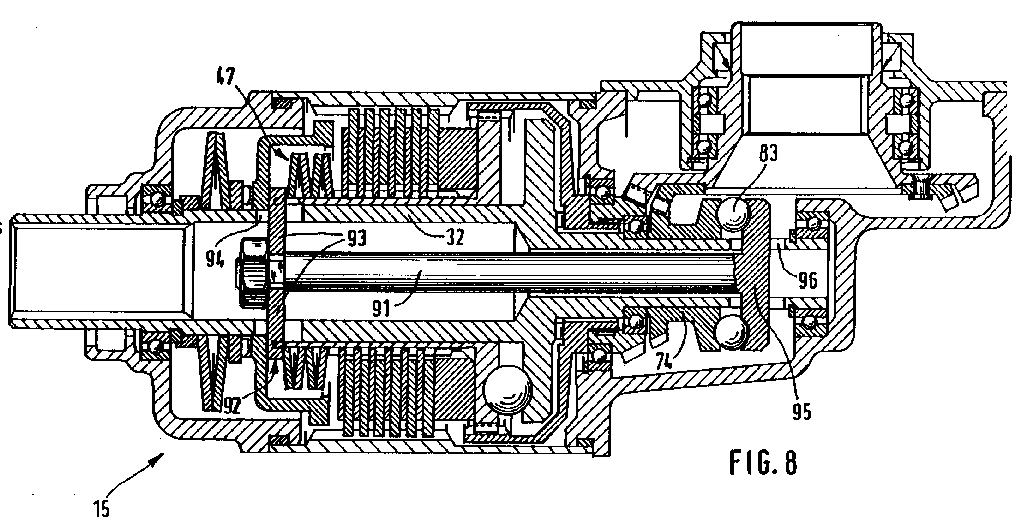

In Fig. 8 ist ein weiteres Ausführungsbeispiel eines Drehmomentbegrenzers 15 wiedergegeben. Hier erfolgt die Verbindung des Vergleichselements 74 mit dem Federpaket 47 über ein die Eingangswelle 32 durchsetzendes Stellglied 91. Das Federpaket 47 liegt am einem Gegenlager 92 an, das sternförmig gestaltet ist und radial gerichtete Finger 93 aufweist, die Ausnehmungen 94 der Eingangswelle 32 durchgreifen. In analoger Weise durchgreift das andere Ende 95 des Stellglieds 91 Ausnehmungen 96 in der Eingangswelle 32 und liegt an den Kugeln 83 an. Im übrigen entspricht die Funktion dieser Ausführungsform des Drehmomentbegrenzers 15 derjenigen nach dem Ausführungsbeispiel entsprechend Fig. 5.

Beide Auführungen des Drehmomentbegrenzers 15 zeichnen sich insbesondere auch dadurch aus, daß die Bauteile, die zur Veränderung der Vorspannung des Federpakets 47 eingesetzt werden, im wesentlichen mit der Drehzahl der Eingangswelle 32 bzw. dem Abtriebsflansch 46 umlaufen. Es findet lediglich eine (sehr kleine) Relativdrehung zur Veränderung der Vorspannkraft statt. Es können daher insbesondere auch keine Störungen eintreten, die z. B. durch Trockenlauf von Lagern, durch Kondenswasser oder andere schädliche Einflüsse hervorgerufen werden können. Von großem Vorteil ist ferner, daß keine Lager eingesetzt werden, die mit hohen Drehzahlen rotieren und zudem noch mit großen Federkräften, die insbesondere beim Ansprechen des Drehmomentbegrenzers zusätlich ansteigen, belastet werden.
Durch die Kerbe 56 in der Steuerbahn 80 ist eine einfache Voreinstellung des Nullpunkts des Drehmomentbegrenzers 15 möglich. Diese Voreinstellung kann durch geeignete Mittel einfach fixiert werden. Diese Fixierung kann beispielsweise durch Sicherung der Ausgangswelle am Gehäuse mittels Bindedraht erfolgen. Der Bindedraht wird unmittelbar vor dem Einbau des Drehmomentbegrenzers entfernt. Der Einbau selbst kann einfach vorgenommen werden, da es die Übersetzungsverhältnisse gestatten, von der Voreinstellung des Drehmomentbegrenzers zu Montagezwecken abzuweichen, ohne daß dies für die Funktion mit Nachteilen verbunden ist.

## Patentansprüche

1. Antriebseinrichtung mit einem Drehmomentbegrenzer (15), bestehend aus einer Eingangswelle (32) und einer Ausgangswelle (38), einem Antriebsflansch (43) mit Antriebsrampen (44), einem in bezug auf die Eingangswelle (32) konzentrisch und axial beweglich angeordneten Abtriebsflansch (46) mit Abtriebsrampen (45), wobei die An- und Abtriebsrampen (44, 45) unter der Wirkung eines die Vorspannkraft erzeugenden Federpakets (47) an Wälzkörpern (48) abgestützt sind sowie einer Lamellembremse (51), dadurch **gekennzeichnet**, daß zur Erfassung der Anzahl der Umdrehungen der Ausgangswelle (38) ein Vergleichselement (74) vorgesehen ist, daß das Federpaket (47) am Antriebsflansch (46) und am Vergleichselement (74) abgestützt ist und daß die Vorspannkraft des Federpakets (47) durch Erzeugen einer Relativdrehung zwischen dem Vergleichselememt (74) und dem Abtriebsflansch (46) bzw. einem Kuppelglied (62) veränderbar ist.

2. Antriebseinrichtung nach Anspruch 1, dadurch **gekennzeichnet,** daß das übertragbare Abtriebsdrehmoment (T_{ab}) am Beginn und am Ende einer Anzahl von Umdrehungen der Ein- und Ausgangswelle (32, 38) auf etwa gleiche oder niedrigere Werte - verglichen mit den Werten des dazwischenliegenden Bereichs der Anzahl von Umdrehungen der Ein- und Ausgangswelle (32, 38) - begrenzbar ist.

3. Antriebseinrichtung nach Anspruch 2, dadurch **gekennzeichnet,** daß die Vorspannkraft des Federpakets (47) in Abhängigkeit der Anzahl der Umdrehungen der Ein- und Ausgangswelle (32, 38) selbsttätig variabel ist.

4. Antriebseinrichtung nach Anspruch 1, dadurch **gekennzeichnet,** daß das Vergleichselement (74) in bezug auf die Eingangswelle (32), den Antriebsflansch (43) bzw. das Kuppelglied (62) und den Abtriebsflansch (46) axial unverschiebbar, jedoch drehbar sowie drehantreibbar angeordnet ist.

5. Antriebseinrichtung nach Anspruch 4, dadurch **gekennzeichnet,** daß ein Ausgangskegelrad (67) mit dem Vergleichselement (74) in treibender Verbindung steht.

6. Antriebseinrichtung nach den Ansprüchen 4 und 5, dadurch **gekennzeichnet,** daß das Vergleichselement (74) eine ringförmige Schulter (75) mit einer Vertiefungen (82) bzw. Erhöhungen (81) aufweisenden Steuerbahn (80) aufweist.

7. Antriebseinrichtung nach den Ansprüchen 1 und 6, **dadurch gekennzeichnet,** daß die Abstützung des Federpakets (47) am Vergleichselement (74) über an der Steuerbahn (80) anliegende Kugeln (83) erfolgt.

8. Antriebseinrichtung nach Anspruch 7, dadurch **gekennzeichnet,** daß zwischen den Kugeln (83) und dem Federpaket (47) ein Stützring (60) eingelegt ist.

9. Antriebseinrichtung nach Anspruch 8, dadurch **gekennzeichnet,** daß der Stützring (60) über Wälzkörper (59) an einer Endscheibe (58) des Federpakets (47) anliegt.

10. Antriebseinrichtung nach den Ansprüchen 1 und 9, dadurch **gekennzeichnet,** daß sich das Federpaket (47) über eine weitere Endscheibe (54) und einen Sicherungsring (55) an einer hülsenförmigen Verlängerung (56) des Abtriebsflansches (46) abstützt.

11. Antriebseinrichtung nach Anspruch 1, dadurch **gekennzeichnet,** daß ein Eingangskegelrad (65) mit einem ersten Zahnkranz (68) in treibender Verbindung steht und einen ersten Trieb (71) bilden und daß ein Zahnrad (73) des Vergleichselements (74) mit einem zweiten Zahnkranz (69) in getriebener Verbindung steht und einen zweiten Trieb (72) bilden.

12. Antriebseinrichtung nach den Ansprüchen 1 und 11, dadurch **gekennzeichnet,** daß sich die Übersetzung (i₁) des ersten Triebs (71) geringfügig von der Übersetzung (i₂) des zweiten Triebs (72) unterscheidet.

13. Antriebseinrichtung nach den Ansprüchen 12 und 13, dadurch **gekennzeichnet,** daß bei Erreichen einer vorgegebenen Anzahl von Umdrehungen der Ausgangswelle (38) eine gegenseitige Relativdrehung zwischen dem Vergleichselement (74) und dem Abtriebsflansch (46) um etwa 120° vorliegt.

14. Antriebseinrichtung nach den Ansprüchen 6 und 7, dadurch **gekennzeichnet,** daß an der Steuerbahn (80) drei Kugeln (83) anliegen und daß die Steuerbahn (80) um jeweils 120° versetzt angeordnete Erhöhungen (81) bzw. Vertiefungen (82) aufweist.

15. Antriebseinrichtung nach Anspruch 14, dadurch **gekennzeichnet,** daß die Steuerbahn (80) wellenförmig verläuft.

16. Antriebseinrichtung nach Anspruch 1, dadurch **gekennzeichnet,** daß das Vergleichselement (74) als Hohlwelle (53) ausgebildet ist, die auf der Eingangswelle (32) frei drehbar gelagert ist.

17. Antriebseinrichtung nach den Ansprüchen 6 und 16, dadurch **gekennzeichnet,** daß die Schulter (75) und die Hohlwelle (53) mit dem Zahnrad (73) des Vergleichselements (74) getrennte Bauteile sind, die über eine Mitnahmeverzahnung (76) formschlüssig verbunden sind.

18. Antriebseinrichtung nach Anspruch 6, dadurch **gekennzeichnet,** daß die Schulter (75) des Vergleichselements (74) über ein Axiallager (77) auf der Seite des Antriebsflansches (43) abgestützt ist, die dem Abtriebsflansch (46) abgewandt ist.

19. Antriebseinrichtung nach den Ansprüchen 1 und 10, dadurch **gekennzeichnet,** daß die hülsenförmige Verlängerung (56) des Abtriebsflansches (46) den Antriebsflansch (43) übergreift, daß sie eine Innenverzahnung (57) aufweist, in die zur Mitnahme eine Außenverzahnung (61) des Kuppelgliedes (62) formschlüssig eingreift und daß das Kuppelglied (62) über eine weitere Mitnahmeverzahnung (63) mit einer Hohlwelle (64) formschlüssig verbunden ist.

20. Antriebseinrichtung nach Anspruch 19, dadurch **gekennzeichnet,** daß die Hohlwelle (64) auf der Hohlwelle (53) des Vergleichselements (74) frei drehbar angeordnet ist.

21. Antriebseinrichtung nach den Ansprüchen 4 bis 7, wobei die Lamellen (50, 52) der Lamellenbremse (51) zwischen dem Abtriebsflansch (46) und dem die Vorspannkraft erzeugenden Federpaket (47) angeordnet sind, dadurch **gekennzeichnet,** daß die in den Lamellen (50, 52) gegenüberliegende Seite des Federpakets (47) an einem Gegenlager (92) anliegt, das mit einem Ende eines Stellglieds (91) fest verbunden ist und daß das andere Ende (95) des Stellglieds (91) an den Kugeln (83) anliegt.

22. Antriebseinrichtung nach den Ansprüchen 7, 14 und 15, dadurch **gekennzeichnet,** daß die Steuerbahn (80) zur Voreinstellung des Drehmomentbegrenzers (15) mit einer Kerbe (56) versehen ist.

## Claims

1. Drive device with a torque limiter (15), comprising an input shaft (32) and an output shaft (38), a drive flange (43) with drive ramps (44), an output flange (46) with output ramps (45) which is disposed axially movably and concentrically relative to the input shaft (32), with the drive and output ramps (44, 45) being supported under the action of a spring assembly (47), which generates the preloading force, on rolling bodies (48), as well as a multiple-disk brake (51), characterized in that a comparison element (74) is provided for acquiring the number of revolutions of the output shaft (38), that the spring assembly (47) is supported on the output flange (46) and on the comparison element (74), and that the preloading force of the spring assembly (47) is variable by generating a relative rotation between the comparison element (74) and the output flange (46) or a coupling member (62).

2. Drive device according to claim 1, characterized in that the transmittable output torque (T_{ab}) at the beginning and at the end of a number of revolutions of the input and output shaft (32, 38) may be limited to approximately identical or lower values - compared to the values of the interlying range of the number of revolutions of the input and output shaft (32, 38).

3. Drive device according to claim 2, characterized in that the preloading force of the spring assembly (47) is automatically variable in dependence upon the number of revolutions of the input and output shaft (32, 38).

4. Drive device according to claim 1, characterized in that the comparison element (74) is disposed, in relation to the input shaft (32), the drive flange (43) or the coupling member (62) and the output flange (46), so as to be axially non-displaceable yet rotatable and capable of rotary operation.

5. Drive device according to claim 4, characterized in that an output bevel gear (67) is drivingly connected to the comparison element (74).

6. Drive device according to claims 4 and 5, characterized in that the comparison element (74) has an annular shoulder (75) with a control path (80) having indentations (82) and bulges (81).

7. Drive device according to claims 1 and 6, characterized in that the support of the spring assembly (47) on the comparison element (74) is effected via balls (83) which lie against the control path (80).

8. Drive device according to claim 7, characterized in that a support ring (60) is inserted between the balls (83) and the spring assembly (47).

9. Drive device according to claim 8, characterized in that the support ring (60) lies via rolling bodies (59) against an end plate (58) of the spring assembly (47).

10. Drive device according to claims 1 and 9, characterized in that the spring assembly (47) is supported via a further end plate (54) and a locking ring (55) on a sleeve-shaped extension (56) of the output flange (46).

11. Drive device according to claim 1, characterized in that an input bevel gear (65) is drivingly connected to a first ring gear (68) and forms a first drive (71), and that a gear wheel (73) of the comparison element (74) is drivingly connected to a second ring gear (69) and forms a second drive (72).

12. Drive device according to claims 1 and 11, characterized in that the transmission ratio (i₁) of the first drive (71) differs slightly from the transmission ratio (i₂) of the second drive (72).

13. Drive device according to claims 12 and 13, characterized in that on attainment of a preset number of revolutions of the output shaft (38) there is a mutual relative rotation between the comparison element (74) and the output flange (46) through approximately 120°.

14. Drive device according to claims 6 and 7, characterized in that three balls (83) lie against the control path (80), and that the control path (80) has bulges (81) and indentations (82), which are disposed each offset relative to the other by 120°.

15. Drive device according to claim 14, characterized in that the control path (80) extends in an undulating manner.

16. Drive device according to claim 1, characterized in that the comparison element (74) takes the form of a hollow shaft (53), which is supported in a freely rotatable manner on the input shaft (32).

17. Drive device according to claims 6 and 16, characterized in that the shoulder (75) and the hollow shaft (53) with the gear wheel (73) of the comparison element (74) are separate structural components, which are positively connected via a driving gear (76).

18. Drive device according to claim 6, characterized in that the shoulder (75) of the comparison element (74) is supported via a thrust bearing (77) on the side of the drive flange (43) remote from the output flange (46).

19. Drive device according to claims 1 and 10, characterized in that the sleeve-shaped extension (56) of the output flange (46) engages over the drive flange (43), that said extension has an internal gear (57) into which an external gear (61) of the coupling member (62) meshes positively for driving, and that the coupling member (62) is positively connected via a further driving gear (63) to a hollow shaft (64).

20. Drive device according to claim 19, characterized in that the hollow shaft (64) is disposed in a freely rotatable manner on the hollow shaft (53) of the comparison element (74).

21. Drive device according to claims 4 to 7, wherein the disks (50, 52) of the multiple-disk brake (51) are disposed between the output flange (46) and the spring assembly (47) generating the preloading force, characterized in that the opposite side of the spring assembly (47) to the disks (50, 52) rests against an end bearing (92) which is rigidly connected to one end of an actuator (91), and that the other end (95) of the actuator (91) rests against the balls (83).

22. Drive device according to claims 7, 14 and 15, characterized in that, for presetting of the torque limiter (15), the control path (80) is provided with a notch (56).

## Revendications

1. Dispositif d'entraînement à limiteur de couple (15), comportant un arbre d'entrée (32) et un arbre de sortie (38), un plateau entraîneur (43) pourvu de rampes entraîneuses (44), un plateau entraîné (46) disposé de manière concentrique et mobile axialement par rapport à l'arbre d'entrée (32) et pourvu de rampes entraînées (45), lesdites rampes entraîneuses et entraînées (44, 45) étant appuyées contre des pièces de roulement (48) sous l'effet d'un paquet de ressorts (47) produisant la précontrainte, ainsi qu'un frein à disques multiples (51), **caractérisé** en ce qu'un élément comparateur (74) est prévu pour enregistrer le nombre de tours de l'arbre de sortie (38), en ce que le paquet de ressorts (47) est appuyé contre le plateau entraîné (46) et contre l'élément comparateur (74), et en ce que la précontrainte du paquet de ressorts (47) est variable au moyen d'une rotation relative entre l'élément comparateur (74) et le plateau entraîné (46) ou un élément d'accouplement (62).

2. Dispositif selon la revendication 1, **caractérisé** en ce que le couple transmissible en sortie (T_{ab}) au début et à la fin d'un nombre de tours des arbres d'entrée et de sortie (32, 38) peut être limité à des valeurs sensiblement égales ou inférieures aux valeurs du domaine intermédiaire dudit nombre de tours des arbres d'entrée et de sortie (32, 38).

3. Dispositif selon la revendication 2, **caractérisé** en ce que la précontrainte du paquet de ressorts (47) est variable automatiquement en fonction du nombre de tours des arbres d'entrée et de sortie (32, 38).

4. Dispositif selon la revendication 1, **caractérisé** en ce que l'élément comparateur (74) est monté de manière à ne pas pouvoir se déplacer axialement, mais à pouvoir tourner et être entraîné en rotation, par rapport à l'arbre d'entrée (32), le plateau entraîneur (43) ou l'élément d'accouplement (62) et le plateau entraîné (46).

5. Dispositif selon la revendication 4, **caractérisé** en ce qu'un pignon conique de sortie (67) est en liaison motrice avec l'élément comparateur (74).

6. Dispositif selon les revendications 4 et 5, **caractérisé** en ce que l'élément comparateur (74) comporte un épaulement annulaire (75) pourvu d'une piste directrice (80) comportant des creux (82) et des bosses (81).

7. Dispositif selon les revendications 1 et 6, **caractérisé** en ce que l'appui du paquet de ressorts (47) contre l'élément comparateur (74) s'effectue par l'entremise de billes (83) appliquées contre la piste directrice (80).

8. Dispositif selon la revendication 7, **caractérisé** en ce qu'une bague d'appui (60) est interposée entre les billes (83) et le paquet de ressorts (47).

9. Dispositif selon la revendication 8, **caractérisé** en ce que la bague d'appui (60) s'appuie contre un disque d'extrémité (58) du paquet de ressorts (47) au moyen de pièces de roulement (59).

10. Dispositif selon les revendications 1 et 9, **caractérisé** en ce que le paquet de ressorts (47) s'appuie contre un prolongement en forme de manchon (56) du plateau entraîné (46) au moyen d'un autre disque d'extrémité (54) et d'une bague d'arrêt (55).

11. Dispositif selon la revendication 1, **caractérisé** en ce qu'un pignon conique d'entrée (65) entraîne une première couronne dentée (68) et forme avec elle une première transmission (71), et en ce qu'un pignon denté (73) de l'élément comparateur (74) est entraîné parc une seconde couronne dentée (69) et forme avec elle une seconde transmission (72).

12. Dispositif selon les revendications 1 et 11, **caractérisé** en ce que le rapport (i₁) de la première transmission (71) est légèrement différent du rapport (i₂) de la seconde transmission (72).

13. Dispositif selon les revendications 12 et 13, **caractérisé** en ce que, lorsqu'un nombre donné de tours de l'arbre de sortie (38) est atteint, il existe une rotation relative de sens opposé d'environ 120° entre l'élément comparateur (74) et le plateau entraîné (46).

14. Dispositif selon les revendications 6 et 7, **caractérisé** en ce que trois billes (83) sont appliquées contre la piste directrice (80) et en ce que la piste directrice (80) comporte des bosses (81) et des creux (82) qui présentent des décalages respectifs de 120°.

15. Dispositif selon la revendication 14, **caractérisé** en ce que la piste directrice (80) a un profil ondulé.

16. Dispositif selon la revendication 1, caractérisé en ce que l'élément comparateur (74) est agencé en arbre creux (53) monté de manière librement rotative sur l'arbre d'entrée (32).

17. Dispositif selon les revendications 6 et 16, **caractérisé** en ce que l'épaulement (75) et l'arbre creux (53) muni du pignon denté (73) de l'élément comparateur (74) sont des éléments séparés qui sont reliés de manière positive par une denture d'entraînement (76).

18. Dispositif selon la revendication 6, **caractérisé** en ce que l'épaulement (75) de l'élément comparateur (74) s'appuie par un palier axial (77) contre le côté du plateau entraîneur (43) qui se trouve à l'opposé du plateau entraîné (46).

19. Dispositif selon les revendications 1 et 10, **caractérisé** en ce que le prolongement en forme de manchon (56) du plateau entraîné (46) recouvre le plateau entraîneur (43) et comporte une denture intérieure (57), dans laquelle une denture extérieure (61) de l'élément d'accouplement (62) est engagée positivement pour l'entraîner, et en ce que l'élément d'accouplement (62) est raccordé positivement à un arbre creux (64) au moyen d'une autre denture d'entraînement (63) .

20. Dispositif selon la revendication 19, **caractérisé** en ce que ledit arbre creux (64) est monté librement rotatif sur l'arbre creux (53) de l'élément comparateur (74).

21. Dispositif selon les revendications 4 à 7, dans lequel les disques (50, 52) du frein à disques multiples (51) sont disposés entre le plateau entraîné (46) et le paquet de ressorts (47) produisant la précontrainte, **caractérisé** en ce que le côté du paquet de ressorts (47) opposé aux disques (50, 52) s'appuie contre une butée (92) fixée à une extrémité d'un élément de réglage (91) et en ce que l'autre extrémité (95) de l'élément de réglage (91) s'appuie contre les billes (83).

22. Dispositif selon les revendications 7, 14 et 15, **caractérisé** en ce que la piste directrice (80) est pourvue d'une encoche (56) pour le préréglage du limiteur de couple (15).
